# DEMANDE DE BREVET EUROPEEN

(11) **EP 4 383 543 A1**
(43) Date de publication de la demande: **12.06.2024**
(21) Numéro de dépôt: 23212657.3
(22) Date de dépôt: 28.11.2023
(51) Int. Cl.: H02M 3/07

(54) **CONVERTISSEUR DE PUISSANCE**

(30) Priorité: 05.12.2022 FR 2212739
(71) Demandeur: Commissariat à l'Energie Atomique et aux Energies Alternatives, 75015 Paris (FR)
(72) Inventeur: PILLONNET, Gaël, 38054 Grenoble Cedex 09 (FR); OUKASSI, Sami, 38054 Grenoble Cedex 09 (FR); PEREZ, Emeric, 38054 Grenoble Cedex 09 (FR); MOURSY, Yasser, 38054 Grenoble Cedex 09 (FR)
(74) Mandataire: Thibon, Laurent

(57) **Abrégé**

La présente description concerne un convertisseur continu-continu (100) comprenant un premier noeud (N1) et un deuxième noeud (N2) destinés à recevoir une tension continue à convertir ; un troisième noeud (N3) destiné à fournir une tension continue référencée au deuxième noeud ; au moins une première capacité (C1) à électrolyte solide ; au moins une première cellule de commutation (420) constituée de quatre commutateurs (421, 422, 431, 432) couplant respectivement une première électrode de la capacité au premier noeud et au troisième noeud et une deuxième électrode de la capacité au deuxième noeud et au troisième noeud ; la fréquence de commutation des commutateurs étant adaptée à la puissance requise en sortie et à sélectionner un mode de fonctionnement de la première capacité parmi un mode de fonctionnement électrostatique et un mode de fonctionnement ionique.

## Description

### Domaine technique

La présente description concerne de façon générale les convertisseurs de puissance.

### Technique antérieure

Il existe une large variété de convertisseurs de puissance. La présente description porte plus particulièrement sur des convertisseurs continu-continu (DC-DC) à base de capacité commutée.

### Résumé de l'invention

Il existe un besoin d'amélioration des convertisseurs continu-continu.

Un mode de réalisation pallie tout ou partie des inconvénients des convertisseurs connus.

Un mode de réalisation prévoit un convertisseur continu-continu comprenant :
- un premier noeud et un deuxième noeud destinés à recevoir une tension continue à convertir ;
- un troisième noeud destiné à fournir une tension continue référencée au deuxième noeud ;
- au moins une première capacité à électrolyte solide ;
- au moins une première cellule de commutation constituée de quatre commutateurs couplant respectivement une première électrode de la capacité au premier noeud et au troisième noeud et une deuxième électrode de la capacité au deuxième noeud et au troisième noeud ;
la fréquence de commutation des commutateurs étant adaptée à la puissance requise en sortie et à sélectionner un mode de fonctionnement de la première capacité parmi un mode de fonctionnement électrostatique et un mode de fonctionnement ionique.

Un mode réalisation prévoit un convertisseur continu-continu comprenant :
- un premier noeud et un deuxième noeud destinés à recevoir une tension continue à convertir ;
- un troisième noeud destiné à fournir une tension continue référencée au deuxième noeud ;
- au moins une première capacité à électrolyte solide présentant un fonctionnement de type ionique en dessous d'une fréquence de coupure et un fonctionnement de type électrostatique pour des fréquences supérieures ;
- au moins une première cellule de commutation constituée de quatre commutateurs couplant respectivement une première électrode de la capacité au premier noeud et au troisième noeud et une deuxième électrode de la capacité au deuxième noeud et au troisième noeud ;
- un circuit configuré pour appliquer, à une information représentative de la puissance requise en sortie, une loi de variation de la fréquence de commutation à appliquer aux commutateurs ;
la loi de variation de la fréquence de commutation des commutateurs étant adaptée à la puissance requise en sortie et à sélectionner un mode de fonctionnement de la première capacité parmi le mode de fonctionnement électrostatique et le mode de fonctionnement ionique.

Un mode de réalisation prévoit un procédé de commande d'un convertisseur continu-continu comprenant :
- un premier noeud et un deuxième noeud destinés à recevoir une tension continue à convertir ;
- un troisième noeud destiné à fournir une tension continue référencée au deuxième noeud ;
- au moins une première capacité à électrolyte solide ;
- au moins une première cellule de commutation constituée de quatre commutateurs couplant respectivement une première électrode de la première capacité au premier noeud et au troisième noeud et une deuxième électrode de la première capacité au deuxième noeud et au troisième noeud ;
la fréquence de commutation des commutateurs étant adaptée à la puissance requise en sortie et à sélectionner un mode de fonctionnement de la première capacité parmi un mode de fonctionnement électrostatique et un mode de fonctionnement ionique.

Un mode de réalisation prévoit un procédé de commande d'un convertisseur continu-continu comprenant :
- un premier noeud et un deuxième noeud destinés à recevoir une tension continue à convertir ;
- un troisième noeud destiné à fournir une tension continue référencée au deuxième noeud ;
- au moins une première capacité à électrolyte solide présentant un fonctionnement de type ionique en dessous d'une fréquence de coupure et un fonctionnement de type électrostatique pour des fréquences supérieures ;
- au moins une première cellule de commutation constituée de quatre commutateurs couplant respectivement une première électrode de la première capacité au premier noeud et au troisième noeud et une deuxième électrode de la première capacité au deuxième noeud et au troisième noeud ;
- appliquer, avec un circuit, à une information représentative de la puissance de sortie, une loi de variation de la fréquence de commutation à appliquer aux commutateurs ; et
- adapter la fréquence de commutation des commutateurs à la puissance requise en sortie et à la sélection d'un mode de fonctionnement de la première capacité parmi le mode de fonctionnement électrostatique et le mode de fonctionnement ionique.

Selon un mode de réalisation, la sélection du mode de fonctionnement est fonction d'une loi de variation de ladite fréquence de commutation en fonction d'au moins une information relative à une puissance d'entrée ou de sortie du convertisseur.

Selon un mode de réalisation, ladite au moins une information est comprise dans un groupe comprenant une tension, un courant, une puissance, une température et leurs variations respectives.

Selon un mode de réalisation, ladite loi de variation présente une fonction de transfert de type proportionnelle et/ou intégrale et/ou dérivée.

Selon un mode de réalisation, la loi de variation provoque un changement de fréquence brusque au passage d'un mode de fonctionnement à l'autre.

Selon un mode de réalisation, la variation de la fréquence est continue.

Selon un mode de réalisation, ledit changement provoque une discontinuité dans la variation de la fréquence.

Selon un mode de réalisation, un tel convertisseur ou procédé comprend :
- au moins une deuxième capacité à électrolyte solide ;
- au moins une deuxième cellule de commutation constituée de quatre commutateurs couplant respectivement une première électrode de la deuxième capacité au premier noeud et au troisième noeud et une deuxième électrode de la deuxième capacité au deuxième noeud et au troisième noeud ;
la fréquence de commutation des commutateurs de la deuxième cellule de commutation étant adaptée à la puissance requise en sortie et à sélectionner un mode de fonctionnement de la deuxième capacité parmi un mode de fonctionnement électrostatique et un mode de fonctionnement ionique.

Selon un mode de réalisation, une loi de sélection est mise en oeuvre pour activer ou désactiver la deuxième cellule de commutation en fonction de la puissance d'entrée et/ou de sortie du convertisseur.

Selon un mode de réalisation, la fréquence de commande des commutateurs de la deuxième cellule est déphasée par rapport à la fréquence de commande des commutateurs de la deuxième cellule.

Selon un mode de réalisation, au moins un oscillateur couplé au troisième noeud du convertisseur est configuré pour fournir la fréquence de commutation des commutateurs.

Selon un mode de réalisation, un oscillateur distinct est associé à chaque mode de fonctionnement.

Selon un mode de réalisation, une loi de variation distincte est associée à chaque mode de fonctionnement.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 illustre schématiquement un exemple de convertisseur de puissance à capacité commutée ;
la figure 2 illustre, sous forme de schémas électriques équivaleurs et de chronogramme, le fonctionnement du convertisseur de la figure 1 ;
la figure 3 illustre l'évolution de la capacité surfacique de différents types de capacité commutée en fonction de la fréquence de commutation ;
la figure 4 illustre un mode de réalisation d'un convertisseur de puissance ;
la figure 5 illustre, sous forme de chronogrammes, des exemples de signaux de commande du convertisseur de la figure 4 ;
la figure 6A illustre, sous la forme d'un graphe tension-courant, le fonctionnement du convertisseur de la figure 4 ;
la figure 6B illustre, sous la forme d'un graphe tension-courant, un autre fonctionnement du convertisseur de la figure 4 ;
la figure 7 illustre, sous la forme d'un graphe fréquence-tension, le fonctionnement du convertisseur de la figure 4 ;
la figure 8A illustre, sous forme de chronogramme, le fonctionnement du convertisseur de la figure 4 ;
la figure 8B illustre, sous forme de chronogramme, le fonctionnement du convertisseur de la figure 4 ;
la figure 8C illustre, sous forme de chronogramme, des exemples de signaux de commande du convertisseur de la figure 4 ;
la figure 9 illustre un autre mode de réalisation d'un convertisseur de puissance ;
la figure 10 illustre, sous forme de graphes, le fonctionnement du convertisseur de la figure 9 ;
la figure 11 illustre, de façon très schématique, un mode de réalisation de circuit de détermination de signaux de commande du convertisseur de la figure 9 ;
la figure 12 illustre, sous forme de chronogrammes, le fonctionnement du convertisseur de la figure 9 ;
la figure 13 illustre un autre mode de réalisation d'un convertisseur de puissance ;
la figure 14 illustre, sous forme de graphe, le fonctionnement du convertisseur de la figure 13 ;
la figure 15 illustre un autre mode de réalisation d'un convertisseur de puissance ;
la figure 16 illustre, sous forme de graphes fréquence-tension, le fonctionnement du convertisseur de la figure 15 ; et
la figure 17 illustre, sous forme de graphe, le fonctionnement du convertisseur de la figure 15.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

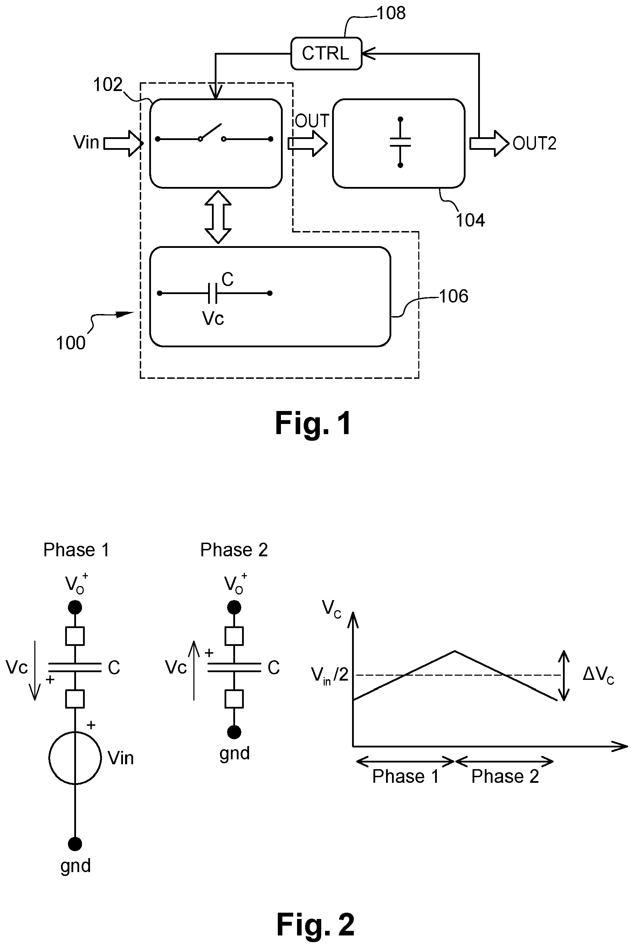

La figure 1 représente schématiquement un exemple de convertisseur de puissance à capacité commutée.

Un convertisseur à capacité commutée (switched capacitor converter en anglais) exploite une alternance de cycles de charge et de décharge d'une capacité en faisant varier la fréquence, et/ou le rapport cyclique de commutation des cycles, et/ou la valeur de la capacité, et/ou la taille des commutateurs ce qui module leur résistance à l'état passant.

Le convertisseur de la figure 1 comprend un étage de conversion d'énergie 100 ayant une cellule de commutation 102 comprenant plusieurs commutateurs organisant la charge d'une ou plusieurs capacités 106 (C) d'un étage de conversion d'énergie 100 à partir d'une tension continue Vin à convertir et leur décharge vers un noeud de sortie OUT généralement couplé à une charge (non représentée) reliée à un noeud OUT2 par une capacité de filtrage 104 facultative. Selon un exemple non représenté, la capacité de filtrage 104 n'est pas présente et le convertisseur agit intrinsèquement comme un filtre. La fréquence et/ou le rapport cyclique de commutation de la cellule 102 et/ou la valeur de la capacité, et/ou la taille des commutateurs, sont réglés par un circuit de commande 108 (CTRL) en fonction de la puissance requise par la charge.

La figure 2 illustre, sous forme de schémas électriques équivaleurs et de chronogramme, le fonctionnement du convertisseur de la figure 1.

Deux schémas électriques équivalents correspondant respectivement aux cycles ou phases de charge (Phase 1) et de décharge (Phase 2) sont illustrés en figure 2. Ces phases alternent au rythme fixé par la cellule de commutation. Le chronogramme de la figure 2 illustre un exemple d'évolution de la tension Vc aux bornes de la capacité C en fonction du temps et plus particulièrement pendant les cycles de charge (Phase 1) et de décharge (Phase 2). Pendant les phases de charge, la capacité C est en série avec la source de tension Vin entre la borne de sortie V0+ et la masse (gnd). Des charges sont alors accumulées dans la capacité et la tension Vc à ses bornes croît. Pendant les phases de décharge, la capacité est connectée à la masse de sorte à se décharger dans la charge connectée en sortie et sa tension Vc décroît. La polarité de la tension Vc s'inverse entre les phases de charge et de décharge. En régime établi, comme illustré par le chronogramme, la tension Vc aux bornes de la capacité a une valeur médiane correspondant à la moitié Vin/2 de la tension d'alimentation Vin.

La quantité de charges transmises de l'entrée à la sortie du convertisseur est directement proportionnelle à l'oscillation ou excursion de tension sur la capacité ΔVc.

A chaque fin de la phase 2, la capacité est reconnectée à l'entrée Vin et l'amplitude de l'oscillation ΔVc induit une perte par redistribution de charges (charge sharing en anglais), réduisant le rendement énergétique du convertisseur. En effet, la recharge de l'élément capacitif entraine un pic de courant traversant les commutateurs (résistifs) qui est proportionnel à ΔVc.

Pour réduire l'excursion de tension ΔVc, une solution est d'augmenter la valeur de capacité. Une autre solution est d'augmenter la fréquence de commutation. Toutefois, plus la fréquence de commutation augmente, plus cela augmente les pertes par commutation dans les commutateurs de la cellule de commutation.

Lorsque l'on souhaite intégrer dans une puce, i.e. de façon monolithique, l'ensemble d'un convertisseur, capacité comprise, on ne peut utiliser les capacités à électrolyte liquide, qui présentent cependant une densité de capacitée volumique importante. On préfère alors utiliser des capacités dites électrostatiques car elles sont compatibles avec les procédés utilisés en microélectronique. Les capacités électrostatiques sont formées de deux électrodes en regard l'une de l'autre séparées par un diélectrique et stockent les charges en surface des électrodes. Par conséquent, ces capacités ont un stockage surfacique. La densité surfacique peut être augmentée avec des capacités dites "3D" ou "Trench" qui utilisent les deux dimensions horizontale et verticale d'un substrat mais cela reste d'une efficacité limitée pour des convertisseurs de puissance.

La présente description a pour origine une nouvelle analyse d'un comportement de capacités apparues plus récemment, dits à électrolyte solide. De telles capacités sont communément désignées super-capacités à électrolyte solide en raison de leur forte capacité surfacique (dans le plan d'un circuit intégré). Elles offrent des capacités de stockage de charges plus importantes qu'une capacité électrostatique en raison de leur fonctionnement ionique. Les super-capacités à électrolyte solide présentent notamment des valeurs de capacité de l'ordre de dix fois supérieures à celles des capacités sous forme de tranchées dans des substrats silicium et de l'ordre de mille fois supérieures à celles des capacités surfaciques.

Une capacité à électrolyte solide est constituée d'au moins deux électrodes en matériau conducteur électronique, séparées par un matériau diélectrique et conducteur ionique à l'état solide, communément appelé électrolyte solide. Plusieurs familles de matériaux sont considérées pour assurer ce rôle, comme par exemple les verres amorphes, par exemple LiPON (Lithium phosphorus oxynitride en anglais), les oxydes cristallisés de la famille des pérovskites et des grenats LLTO (Lithium lanthanum titanate oxide en anglais), LLZO (Lithium lanthanum Zircon oxide en anglais), LATP (Li_{1.3}Al_{0.3}Ti_{1.7}(PO4)₃), et les sulfures LGPS (Li₁₀GeP₂S₁₂) ou LPS (Li₃PS₄) pour le cas des électrolytes solides au lithium.

Ces composants se caractérisent par une réponse capacitive double ; une première dans un domaine de faibles fréquences liée à la formation d'une double couche électrochimique aux interfaces électrode/électrolyte, et une deuxième liée à la polarisation diélectrique de l'électrolyte solide. Cette spécificité est caractéristique des capacités ioniques mettant en oeuvre un électrolyte solide.

Toutefois, les super-capacités à électrolyte solide perdent de leur efficacité à fréquence élevée en raison de la moindre mobilité des ions sur lesquelles reposent leur principe de fonctionnement par rapport aux électrons qu'exploitent les capacités électrostatiques.

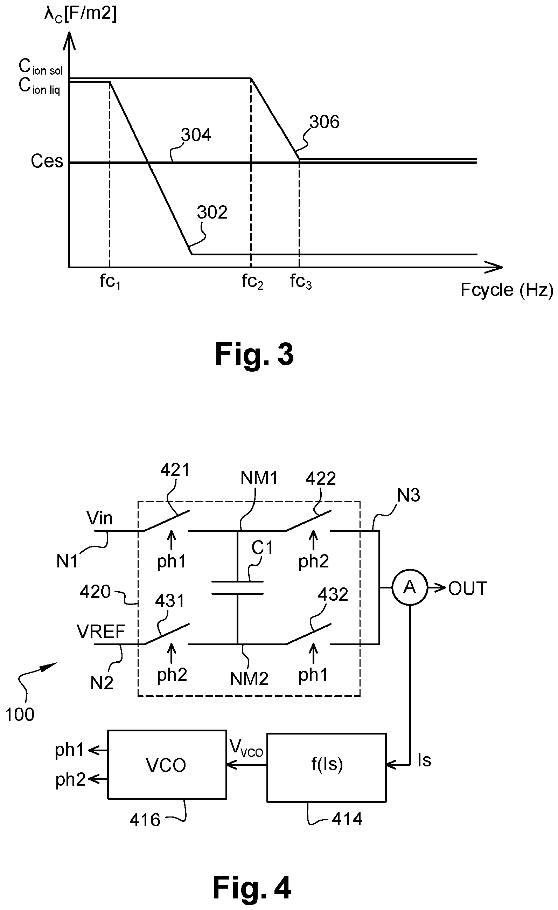

La figure 3 représente l'évolution de la capacité surfacique de différents types de capacité commutée en fonction de la fréquence de commutation.

Cette figure fait ressortir les différences de densité surfacique (dans le plan d'un circuit intégré ou substrat) en fonction de la fréquence pour différents types de capacités.

La courbe 304 représente l'évolution de la valeur d'une capacité électrostatique Ces, qui est sous forme de tranchées, par unité de surface. Cette valeur reste stable indépendamment de la fréquence en raison du fonctionnement surfacique (les charges sont stockées dans les électrodes) d'une telle capacité.

La courbe 302 représente l'évolution de la valeur d'une capacité à électrolyte liquide (Cion liq) par unité de surface. Ces capacités sont particulièrement adaptées à un stockage statique et sont donc efficaces, en commutation, à basse fréquence. On peut considérer qu'en deçà d'une fréquence fc1, qui est de l'ordre du Hz à température ambiante, la capacité surfacique est supérieure, d'environ un facteur 20, à celle d'une capacité électrostatique Ces de même valeur nominale. Au-delà de la fréquence fc1, la valeur par unité de surface de la capacité à électrolyte liquide diminue jusqu'à devenir inférieure à celle de la capacité électrostatique Ces.

La courbe 306 représente l'évolution de la valeur d'une capacité à électrolyte solide (Cion sol) par unité de surface. En deçà d'une fréquence fc2, i.e. entre 10kHz et 1MHz à température ambiante, la valeur de capacité est équivalente à celle d'une capacité à électrolyte solide en fonctionnement ionique. Toutefois, la fréquence à partir de laquelle la capacité surfacique diminue et que la capacité quitte un fonctionnement ionique est supérieure à la fréquence dans le cas d'une capacité à électrolyte liquide. En outre, pour des fréquences supérieures à la fréquence fc2, la capacité surfacique devient du même ordre de grandeur que celle d'une capacité électrostatique Ces qui serait formée sous forme de tranchées, ce qui reste supérieure à celle d'une capacité à électrolyte liquide. On peut dire qu'une capacité à électrolyte solide présente un fonctionnement de type ionique jusqu'à une certaine fréquence de commutation et un fonctionnement de type électrostatique au-delà. Le fonctionnement de type électrostatique est dit stabilisé au-delà d'une fréquence fc3 supérieure à la fréquence fc2.

On prévoit de tirer profit de cette particularité des capacités à électrolyte solide pour adapter le fonctionnement d'un convertisseur entre fonctionnement ionique et fonctionnement électrostatique en fonction des besoins de la charge. Plus précisément, les modes de réalisation décrits prévoient d'utiliser de façon contrôlée le mode de fonctionnement de la capacité à électrolyte solide d'un convertisseur en fonction de l'utilisation et/ou de l'application du convertisseur dans lequel elle est intégrée pour tirer profit du mode ionique quand la demande se porte sur une forte densité d'énergie (et fort rendement de conversion) et du mode électrostatique lors d'appels de puissance non pourvus par le mode ionique.

La figure 4 illustre un mode de réalisation d'un convertisseur 100 de puissance.

Selon l'exemple de la figure 4, le convertisseur de puissance est un convertisseur continu-continu. Le convertisseur comprend un premier noeud N1 et un deuxième noeud N2 destinés à recevoir une tension continue à convertir Vin-VREF, VREF étant par exemple la masse. Le convertisseur de la figure 4 comprend un troisième noeud N3 destiné à fournir une tension continue OUT référencée au deuxième noeud.

Le convertisseur de la figure 4 comprend également au moins une première capacité C1 à électrolyte solide et au moins une première cellule de commutation 420 constituée par exemple de quatre commutateurs 421, 422, 431, 432. Les quatre commutateurs couplent respectivement une première électrode NM1 de la capacité C1 au premier noeud N1 et au troisième noeud N3 et une deuxième électrode NM2 de la capacité au deuxième noeud N2 et au troisième noeud N3. Les première et deuxième électrodes de la capacité C1 sont reliées, de préférence connectées, aux points milieux respectifs des associations en série des commutateurs 421, 422 et 431, 432.

En d'autres termes :
- le commutateur 421 couple le noeud N1 à la première électrode NM1 de la capacité C1 ;
- le commutateur 422 couple le noeud N3 à la première électrode NM1 de la capacité C1 ;
- le commutateur 431 couple le noeud N2 à la deuxième électrode de la capacité C1 ; et
- le commutateur 432 couple la deuxième électrode de la capacité au noeud N3.

Les commutateurs 421 et 432 sont commandés par un signal ph1. Les commutateurs 422 et 431 sont commandés par un signal ph2, les signaux ph1 et ph2 étant en opposition de phase. Les commutateurs sont commandés en modulation de fréquence avec une loi de commande spécifique, tout en gardant par exemple un rapport cyclique à 50%, ou éventuellement en modulation de largeur d'impulsions (Pulse Width Modulation ou PWM en anglais). La fréquence de commutation des commutateurs est adaptée en fonction de la puissance requise en sortie du convertisseur.

Selon les modes de réalisation décrits, la première capacité est dans un mode de fonctionnement électrostatique ou dans un mode de fonctionnement ionique selon la fréquence de commutation. En d'autres termes, la capacité C1 passe d'un mode de fonctionnement à un autre en fonction de la fréquence de commutation. On tire ici profit de la particularité de la réponse (figure 3) en termes de mode de fonctionnement d'une capacité à électrolyte solide en fonction de la fréquence.

Dans l'exemple de la figure 4, les signaux de commande ph1 et ph2 des commutateurs 421, 422, 431 et 432 sont fournis par un oscillateur commandé en tension 416 (VCO) qui reçoit une consigne Vvco d'un circuit 414 appliquant, à une information représentative de la puissance de sortie (plus précisément de variation de la puissance appelée par la charge alimentée par le convertisseur), une loi de variation de la fréquence de commutation à appliquer aux commutateurs. Dans l'exemple représenté, l'information représentative de la puissance de sortie (appelée par la charge reliée au noeud N3) correspond à une mesure Is du courant de sortie. Le circuit 414 applique alors un loi f(Is) de variation de la fréquence en fonction du courant Is. En variante, l'information représentative de la puissance (de variation de la puissance) appelée par la charge est la tension de sortie, la température, etc.

Dans l'exemple de la figure 4, les circuits 414 et 416 sont représentés séparés. On notera toutefois qu'il pourra s'agir d'un seul et même circuit. Selon une autre variante, la loi de variation de la fréquence correspond à une mise en oeuvre logicielle, le circuit 414 correspondant alors à un processeur.

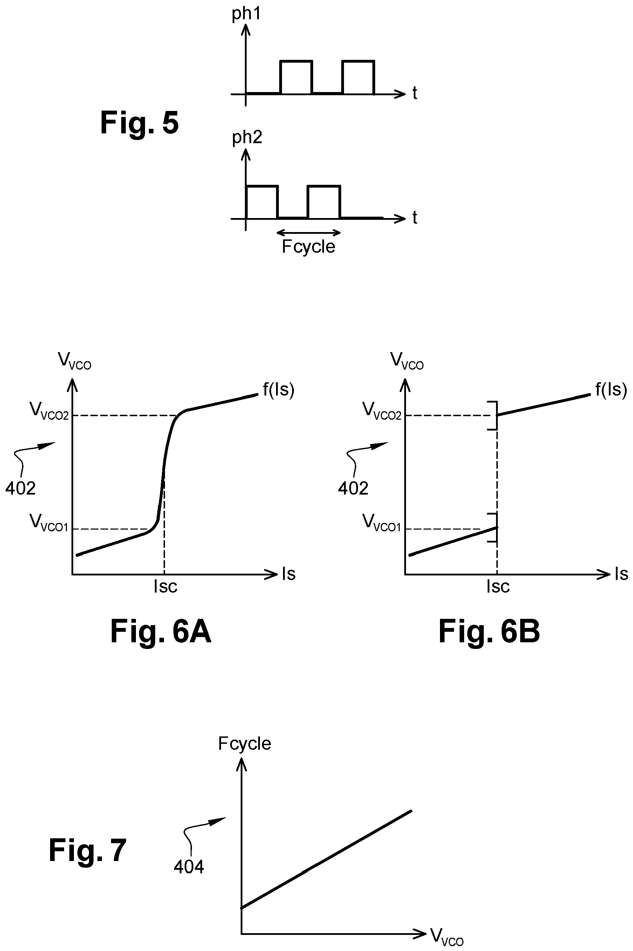

La figure 5 illustre, sous forme de chronogrammes, des exemples de signaux de commande ph1 et ph2 du convertisseur de la figure 4.

Dans l'exemple simplifié de la figure 5, les signaux ph1 et ph2 issus de l'oscillateur 416 sont de type créneaux et en opposition de phase. Dans l'exemple de la figure 5, la fréquence Fcycle déterminée par la loi de variation du circuit 414 est identique et stable sur plusieurs périodes et le rapport cyclique est de 50%. Toutefois, une variation de fréquence peut être envisagée. En pratique, les signaux ph1 et ph2 sont légèrement déphasés afin d'éviter une conduction simultanée des commutateurs 421 et 422, respectivement 431 et 432.

La figure 6A illustre, sous la forme d'un graphe tension-courant, le fonctionnement du convertisseur de la figure 4.

La figure 6A illustre plus particulièrement la loi de variation f(Is) mise en oeuvre par le bloc 414 sous la forme de l'évolution de la tension Vvco de commande de l'oscillateur 416 en fonction du courant de sortie Is du convertisseur.

Dans l'exemple de la figure 6A, la tension Vvco suit une courbe comportant deux portions de pentes relativement douces, approximativement linéaires, séparées par une portion dite "de décrochement" de pente relativement forte (par rapports aux pentes des deux autres portions) à une valeur dite de courant critique Isc. Pour des courants Is inférieurs à la valeur Isc, la tension Vvco croît depuis une valeur minimale Vvco1 jusqu'à décrocher brusquement mais de façon continue lorsque le courant critique Isc est atteint pour atteindre une valeur Vvco2 à partir de laquelle la tension se remet à évoluer selon une pente relativement douce, la valeur Vvco2 étant supérieure à la valeur Vvco1.

Le décrochement dans la loi de variation f(Is) de la figure 6A correspond au passage continu d'un mode de fonctionnement ionique à un mode de fonctionnement électrostatique de la capacité C1 tel qu'illustré par la figure 3 pour des fréquences supérieures à la fréquence fc2. Cela permet de réduire les effets transitoires d'un passage brusque d'une fréquence à une autre qui pourrait créer d'éventuelles pertes de charges.

La fonction f(Is) peut être définie à la fabrication, calibrée après fabrication, recalibrée ponctuellement, et/ou asservie en temps réel par l'estimation du rendement instantané par exemple via des mesures supplémentaires de tensions et de courant. La valeur du courant critique Isc dépend des performances intrinsèques de la capacité C1 mais aussi du dimensionnement de la cellule de commutation. La valeur du courant critique Isc est par exemple comprise entre 1 mA et 1A. Cette valeur est inversement proportionnelle à la valeur de la capacité, à la fréquence de coupure et à la tension d'alimentation, et est proportionnelle à la période de découpage et la taille des transistors. Pour une capacité de 1µF, une fréquence de coupure de 100kHz et sous 2V d'entrée, la valeur est d'environ 1mA.

La figure 6B illustre, sous la forme d'un graphe tension-courant, un autre fonctionnement du convertisseur de la figure 4.

L'exemple de la figure 6B est similaire à celui de la figure 6A sauf que la fonction f(Is) est définie par morceaux et est composée des deux portions de pentes « douces » sans la portion de décrochement continue de la figure 6A entre les valeurs Vvco1 et Vvco2. Dans le cas de la figure 6B, lorsque le courant franchit la valeur Isc, la tension Vvco « saute » de la valeur Vvco1 à la valeur Vvco2 sans prendre de valeur intermédiaire. La valeur de tension Vvco1 correspond par exemple à la fréquence fc2 et la valeur de tension Vvco2 correspond à la fréquence fc3 où la capacité est stabilisée à sa valeur de capacité électrostatique Ces. Cela permet de passer directement d'un comportement ionique à un comportement électrostatique sans passer par une baisse continue de la capacité.

La figure 7 illustre, sous la forme d'un graphe fréquence-tension, le fonctionnement du convertisseur de la figure 4. Plus particulièrement, la figure 7 illustre une loi de variation mise en oeuvre par l'oscillateur 416 sous la forme de l'évolution de la fréquence de commutation Fcycle en fonction de la tension Vvco de commande de l'oscillateur 416. Dans l'exemple de la figure 7, la fréquence Fcycle augmente linéairement avec la tension Vvco. Dans d'autres exemples non illustrés, la variation est par exemple non linéaire ou la fréquence Fcycle diminue lorsque la tension Vvco augmente.

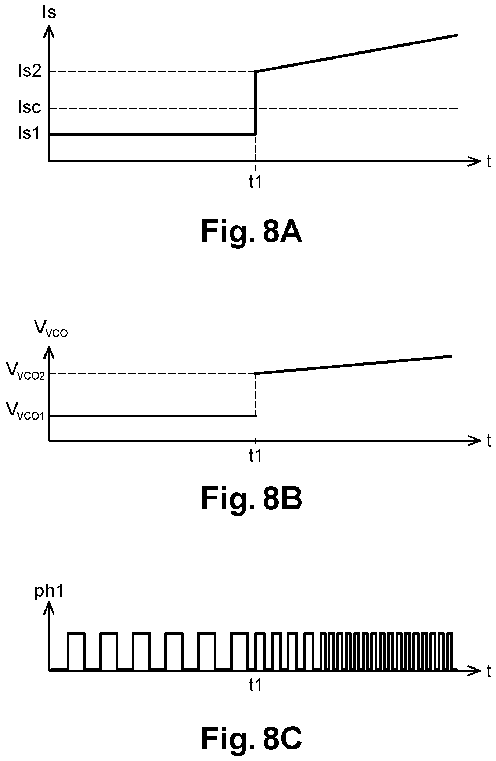

La figure 8A illustre, sous forme de chronogramme, le fonctionnement du convertisseur de la figure 4. Plus particulièrement, la figure 8A illustre un exemple d'allure du courant Is en fonction du temps.

Dans l'exemple de la figure 8A, le courant Is suit une courbe comportant deux portions de pentes approximativement linéaires, séparées par une portion dite "de décrochement" de pente quasi verticale à un instant t1 où la valeur du courant Is passe par la valeur Isc de courant critique. Avant l'instant t1, le courant Is est stable à une valeur minimale Is1 inférieure à la valeur de courant critique Isc. A l'instant t1, le courant Is croît depuis la valeur minimale Is1 jusqu'à décrocher brusquement mais de façon continue en dépassant le courant critique Isc pour atteindre une valeur Is2 à partir de laquelle le courant se met à augmenter selon une pente relativement douce.

La figure 8B illustre, sous forme de chronogramme, le fonctionnement du convertisseur de la figure 4. Plus particulièrement, la figure 8B illustre un exemple d'allure de la tension Vvco en fonction du temps sur un intervalle de temps identique à celui de la figure 8A. Dans l'exemple de la figure 8B, la tension Vvco est maintenue stable pour générer une fréquence stable jusqu'à l'instant t1. A l'instant t1, la tension Vvco « saute » de la valeur Vvco1 à la valeur Vvco2 sans prendre de valeur intermédiaire. Cela permet de passer directement d'un comportement ionique à un comportement électrostatique sans passer par une baisse continue de la capacité. Au-delà de l'instant t1, la tension Vvco augmente linéairement pour augmenter la fréquence.

La figure 8C illustre, sous forme de chronogramme, des exemples de signaux de commande du convertisseur de la figure 4. Plus particulièrement, le signal de commande ph1 présente la fréquence fc2 jusqu'à l'instant t1. A partir de l'instant t1, la fréquence augmente au-dessus de la fréquence fc3 pour passer d'un comportement ionique à un comportement électrostatique stabilisé.

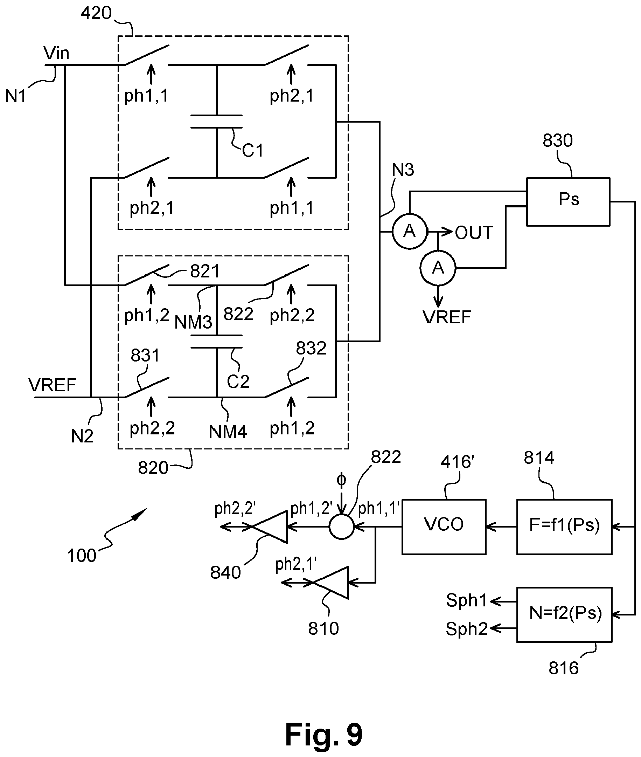

La figure 9 illustre un autre mode de réalisation d'un convertisseur 100 de puissance.

L'exemple de la figure 9 illustre le fait que plusieurs structures ou étages comportant, chacun, une cellule de commutation et une capacité à électrolyte solide peuvent être associées en parallèle. Dans l'exemple représenté, deux cellules de commutation 420 et 820 et deux capacité C1 et C2 à électrolyte solide, respectivement associées aux cellules 420 et 820 sont représentées. La cellule 820 est par exemple constituée de quatre commutateurs 821, 822, 831 et 832. Les quatre commutateurs couplent respectivement une première électrode NM3 de la deuxième capacité C2 au premier noeud N1 et au troisième noeud N3 et une deuxième électrode NM4 de la deuxième capacité C2 au deuxième noeud N2 et au troisième noeud N3. Les première et deuxième électrodes de la capacité C2 sont reliées, de préférence connectées, aux points milieux respectifs des associations en série des commutateurs 821, 822 et 831, 832.

En d'autres termes :
- le commutateur 821 couple le noeud N1 à la première électrode NM3 de la capacité C2 ;
- le commutateur 822 couple le noeud N3 à la première électrode NM3 de la capacité C2 ;
- le commutateur 831 couple le noeud N2 à la deuxième électrode NM4 de la capacité C2 ; et
- le commutateur 832 couple la deuxième électrode NM4 de la capacité C2 au noeud N3.

Du point de vue des signaux de commande, les signaux de commande de la cellule 420, référencés ph1 et ph2 en figure 4 sont ici référencés ph1,1 et ph2,1.

De façon similaire, les commutateurs 821 et 832 de la cellule 820 sont commandés par un signal ph1,2 et les commutateurs 822 et 831 sont commandés par un signal ph2,2, les signaux ph1,2 et ph2,2 étant en opposition de phase. Comme pour la cellule 420, les commutateurs sont commandés en faisant varier leur fréquence de commutation avec une fréquence de commutation adaptée à la puissance requise en sortie du convertisseur, le rapport cyclique est par exemple gardé stable à 50%. En faisant varier la fréquence, l'impédance de sortie du convertisseur change ce qui fait varier la tension de sortie.

La deuxième capacité C2 est, de façon similaire à ce qui a été décrit en relation avec la capacité C1, dans un mode de fonctionnement électrostatique ou dans un mode de fonctionnement ionique selon la fréquence de commutation.

Dans l'exemple de la figure 9, les signaux de commande ph1,1 ph2,1 ph1,2 et ph2,2 sont obtenus à partir d'un signal de sortie ph1,1' d'un oscillateur 416' commandé en tension, similaire à celui de la figure 4, et qui reçoit une consigne d'un circuit 814, similaire au circuit 414, appliquant, à une information représentative de la puissance de sortie, une loi f1(Ps) de variation de la fréquence de commutation à appliquer aux commutateurs. L'information représentative de la puissance de sortie correspond à une détermination (circuit 830, (Ps)) de la puissance de sortie à partir de mesures de courant (I) et de tension (V) au niveau du troisième noeud N3, fournies au circuit 830. Le circuit 416' fournit un signal ph1,1' servant à générer deux signaux ph2,1' et ph2,2' représentant respectivement, l'inverse (inverseur 810) du signal ph1,1' et le signal ph1,1' déphasé d'un déphasage phi (φ) de, par exemple, 90° puis inversé (inverseur 840). Ces signaux ph2,1' et ph2,2' sont combinés avec deux signaux Sph1 et Sph2 représentatifs du ou des étages à utiliser pour fournir les signaux ph1,1, ph1,2, ph2,1 et ph2,2. Les signaux Sph1 et Sph2 sont fournis par un circuit 816 qui applique une loi f2(Ps) donnant le nombre N (1 ou 2) d'étages à utiliser en fonction de la puissance Ps. Dans un exemple, lorsque N=1, Sph1=1 et Sph2=0, et lorsque N=2, Sph1=Sph2=1.

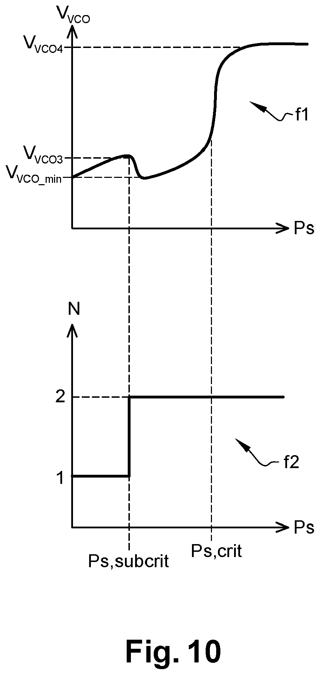

La figure 10 illustre, sous forme de graphes, le fonctionnement du convertisseur de la figure 9.

La figure 10 illustre plus particulièrement la loi de variation f1(Ps) mise en oeuvre par le bloc 814 sous la forme de l'évolution de la tension de commande de l'oscillateur 416' en fonction de la puissance de sortie Ps du convertisseur.

La figure 10 illustre également la loi de variation f2(Ps) mise en oeuvre par le bloc 816 sous la forme du nombre d'étages N=1 ou 2 en fonction de la puissance de sortie Ps du convertisseur.

Dans l'exemple de la figure 10, la tension Vvco suit une courbe comportant deux portions de pentes relativement douces, approximativement linéaires, séparées par une portion dite "de décrochement" de pente, d'abord négative au niveau d'une valeur de puissance dite « subcritique » Ps,subcrit, puis positive et relativement forte (par rapports aux pentes des deux autres portions) au niveau d'une valeur de puissance dite « critique » Ps,crit, supérieure à la valeur subcritique.

Pour des puissances inférieures à la valeur Ps,subcrit, la tension Vvco croît jusqu'à une valeur Vvco3 puis diminue brusquement vers une valeur minimale Vvco_min correspondant à la puissance subcritique Ps,subcrit. Au-delà de la puissance subcritique Ps,subcrit, la tension Vvco croît jusqu'à décrocher brusquement au niveau de la puissance critique Ps,crit pour atteindre une valeur Vvco4 à partir de laquelle la tension se remet à évoluer selon une pente relativement douce, la valeur Vvco4 étant supérieure à la valeur Vvco3 et Vvco_min.

Dans l'exemple de la figure 10, le nombre d'étages N utilisés est de un pour les puissances inférieures à la puissance subcritique Ps,subcrit et de deux pour des puissances supérieures. Autrement dit, pour les puissances inférieures à la puissance subcritique Ps,subcrit, seule la première cellule de commutation 420 est utilisée (la capacité C1 opérant en mode ionique) et pour les puissances supérieures à la puissance subcritique Ps,subcrit, les deux cellules de commutation 420 et 820 sont utilisées. Entre les puissance Ps,subcrit et Ps,crit, la fréquence de commutation est telle que les capacités C1 et C2 opèrent en mode ionique. L'utilisation d'une ou de deux capacités en mode ionique permet d'optimiser le rendement en fonction de la puissance appelée. Au-delà de la puissance déterminée Ps,crit, la loi de variation f1(Ps) provoque l'utilisation des capacités en mode électrostatique.

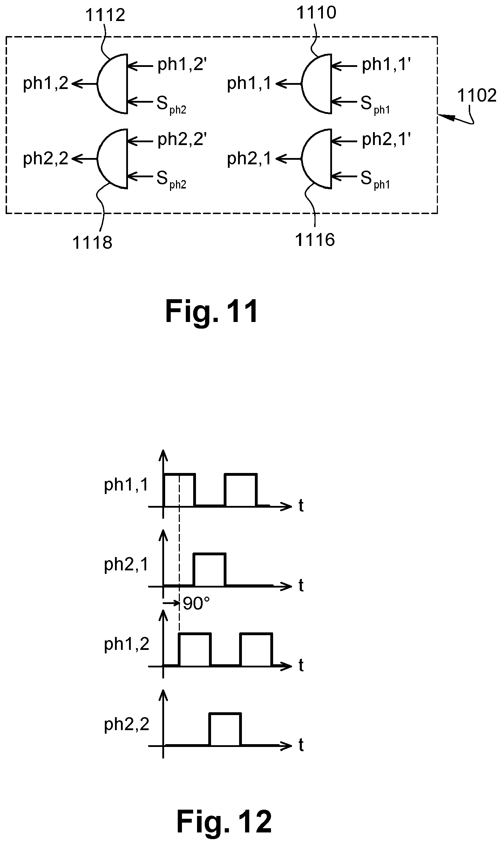

La figure 11 illustre, de façon très schématique, un mode de réalisation de circuit 1102 de détermination de signaux de commande du convertisseur de la figure 9.

Le circuit 1102 reçoit, en entrée, les signaux Sph1, Sph2, ph1,1', ph1,2', ph2,1' et ph2,2', opère des combinaisons logiques de ces signaux et fournit, en sortie, les signaux ph1,1, ph1,2, ph2,1 et ph2,2.

Dans l'exemple représenté :
- une porte logique 1110 de type ET combine les signaux ph1,1' et Sph1 et fournit le signal ph1,1 ;
- une porte logique 1112 de type ET combine les signaux ph1,2' et Sph2 et fournit le signal ph1,2 ;
- une porte logique 1116 de type ET combine les signaux ph2,1' et Sph1 et fournit le signal ph2,1 ; et
- une porte logique 1118 de type ET combine les signaux ph2,2' et Sph2 et fournit le signal ph2,2.

La figure 12 illustre, sous forme de chronogrammes, le fonctionnement du convertisseur de la figure 9.

Le chronogramme de la figure 12 représente plus particulièrement un exemple d'allures des signaux ph1,1, ph2,1, ph1,2 et ph2,2.

On suppose arbitrairement un rapport cyclique de 50% comme en figure 5. Les signaux ph1,1 et ph2,1 ont donc des allures similaires à celles décrites en relation avec la figure 5. Comme les deux étages peuvent fonctionner simultanément, les signaux ph1,2 et ph2,2 présentent un même rapport cyclique que les signaux ph1,1 et ph2,2, soit ici 50%. Dans l'exemple de la figure 12, les signaux ph1,1 et ph1,2, respectivement ph2,1 et ph2,2 sont déphasés de 90° (tout autre déphasage peut être prévu).

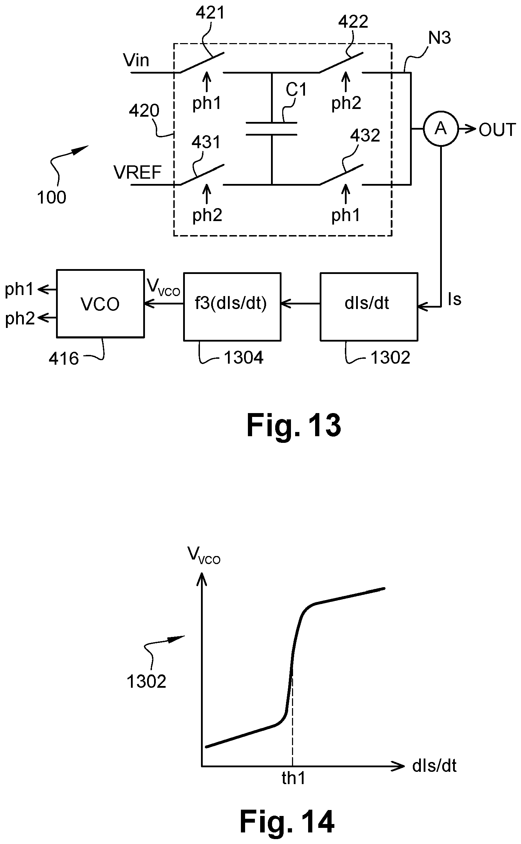

La figure 13 illustre un autre mode de réalisation d'un convertisseur 100 de puissance.

L'exemple représenté est similaire à l'exemple de la figure 4 à l'exception du bloc 414 qui est remplacé par un bloc 1302, (dIs/dt) déterminant une variation temporelle (dérivée) du courant de sortie Is, par exemple liée à un changement d'appel de puissance par la charge, et un bloc 1304, appliquant une loi de variation f3(dIs/dt) à l'information représentative de la dérivée du courant de sortie, fournie pas le bloc 1302. L'oscillateur commandé en tension 416 reçoit la consigne Vvco du circuit 1304 et fournit les signaux ph1,1 et ph1,2.

L'exemple représenté sur la figure 13 permet de basculer d'un mode ionique à un mode électrostatique de façon temporaire lors d'un appel de courant en sortie pour bénéficier d'une meilleure réponse en tension du convertisseur, puis de repasser en mode ionique.

Dans l'exemple de la figure 13, les circuits 1302 et 1304 sont représentés séparés. On notera toutefois qu'il pourra s'agir d'un seul et même circuit. Selon une autre variante, la loi de variation de la fréquence correspond à une mise en oeuvre logicielle par un processeur.

La figure 14 illustre, sous forme de graphe, le fonctionnement du convertisseur de la figure 13.

La figure 14 illustre plus particulièrement la loi de variation f3(dIs/dt) mise en oeuvre par le bloc 1304 sous la forme de l'évolution de la tension Vvco de commande de l'oscillateur 416 en fonction de la dérivée par rapport au temps dIs/dt du courant de sortie Is du convertisseur.

La loi de variation f3(dIs/dt) de la figure 14 est similaire à la loi de variation représentée sur la figure 6A, la tension Vvco de la figure 14 décrochant pour une valeur th1 de façon équivalente au décrochement ayant lieu pour la valeur Isc dans la figure 6A.

Il peut être intéressant de basculer d'un mode ionique à un mode électrostatique de façon temporaire lors d'un appel de courant en sortie pour bénéficier d'une meilleure réponse en tension du convertisseur, puis de repasser en mode ionique lorsque l'appel de puissance diminue de nouveau.

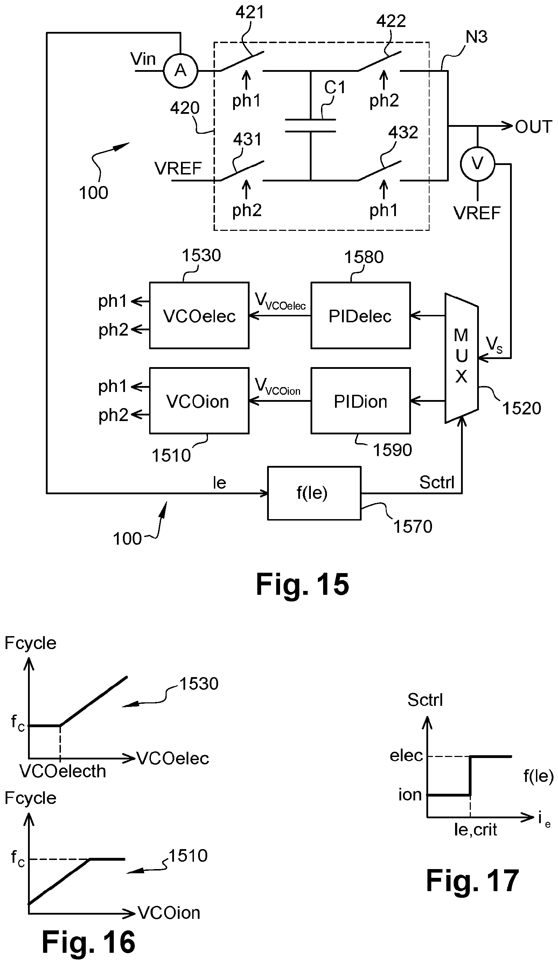

La figure 15 illustre un autre mode de réalisation d'un convertisseur 100 de puissance.

Le convertisseur représenté comprend la première cellule de commutation 420 de la figure 4.

Dans l'exemple de la figure 15, les signaux de commande ph1 et ph2 des commutateurs 421, 422, 431 et 432 sont fournis, soit par un oscillateur commandé en tension 1530 (VCOelec), soit par un oscillateur commandé en tension 1510 (VCOion), en fonction d'une sélection effectuée par un multiplexeur 1520 (MUX). L'oscillateur 1530 reçoit une consigne Vvcoelec d'un circuit 1580 (PIDelec) appliquant, à une information représentative de la puissance de sortie, ici la tension de sortie Vs (circuit de mesure V), une fonction de transfert, de type proportionnelle-intégrale-dérivée, définissant une loi de variation de la fréquence de commutation à appliquer aux commutateurs pour un fonctionnement de la capacité C1 en mode ionique. L'oscillateur 1510 reçoit une consigne Vvcoion d'un circuit 1590 (PIDelec) appliquant, à l'information représentative de la puissance de sortie, une fonction de transfert, de type proportionnelle-intégrale-dérivée, définissant une loi de variation de la fréquence de commutation à appliquer aux commutateurs pour un fonctionnement de la capacité C1 en mode électrostatique. Les fonctions de transfert de circuits 1580 et 1590 peuvent être identiques ou différentes, c'est-à-dire que leurs coefficients proportionnel, intégral et dérivé peuvent être identiques ou différents d'un circuit à l'autre.

Dans l'exemple représenté, le multiplexeur 1520 reçoit en entrée l'information représentative de la puissance de sortie (de la tension Vs dans le cas de la figure 15) et est commandé par un bloc 1570 mettant en oeuvre une fonction f(Ie) de sélection du mode électrostatique ou ionique en fonction d'une information représentative de la puissance d'entrée du convertisseur (du courant d'entrée Ie, circuit A, dans le cas de la figure 15). En fonction de la commande Sctrl issue du bloc 1570, le multiplexeur 1520 transfère la valeur de la tension Vs au circuit 1580 ou au circuit 1590.

Dans l'exemple de la figure 15, les circuits 1580 et 1590 ou 1530 et 1510 sont représentés séparés. On notera toutefois qu'il pourra s'agir d'un seul et même circuit.

Selon une autre variante, la loi de variation de la fréquence respective des circuits 1580 et/ou 1590 correspond à une mise en oeuvre logicielle, les circuits 1580 et/ou 1590 correspondants alors à un processeur.

Dans un exemple, la valeur du coefficient de proportionnalité des blocs 1580 ou 1590 est d'environ 1 (si la fonction de transfert des blocs 1530 ou 1510 est unitaire) . Dans un autre exemple, la valeur du coefficient d'intégration des blocs 1580 ou 1590 est définie avec une fonction inversement proportionnelle à la fréquence de coupure. Dans un autre exemple, la valeur du coefficient de dérivation des blocs 1580 ou 1590 est liée à la constante de temps de la capacité formée par la valeur de la capacité et de sa résistance d'accès.

La figure 16 illustre, sous forme de graphes fréquence-tension, le fonctionnement du convertisseur de la figure 15.

La figure 16 illustre plus particulièrement la variation de la fréquence de commutation fcycle des signaux de sortie des oscillateurs 1510 et 1530.

Dans le cas de l'oscillateur 1510, la fréquence fcycle augmente, par exemple de façon linéaire, à mesure que la tension VCOion augmente, jusqu'à atteindre une valeur de plateau fc qui n'est plus dépassée ensuite.

Dans le cas de l'oscillateur 1530, la fréquence fcycle reste stable à la valeur fc tant que la tension VCOelec n'a pas atteint une valeur VCOelecth. Au-delà de la valeur VCOelecth, la fréquence fcycle augmente, par exemple linéairement.

La figure 17 illustre, sous forme de graphe, le fonctionnement du convertisseur de la figure 15.

La figure 17 illustre plus particulièrement la fonction f(Ie) déterminant le signal de commande Sctrl du multiplexeur en fonction du courant d'entrée Ie du convertisseur. En-dessous d'un courant Ie,crit dit « critique », le signal Sctrl commande le multiplexeur pour sélectionner la branche (régulateur PID 1590 et oscillateur 1510) dédiée au mode ionique. Au-dessus du courant Ie,crit, le signal Sctrl commande le multiplexeur pour sélectionner la branche (régulateur PID 1580 et oscillateur 1530) dédiée au mode électrostatique.

L'exemple de la figure 15 permet d'asservir le mode de la capacité C1 en fonction du rendement du convertisseur grâce à l'utilisation d'une valeur représentative de la puissance d'entrée (dans ce cas le courant d'entrée Ie) pour la régulation de la tension de sortie.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, d'autres configurations sont envisageables comme la connexion série dans une première phase entre la première cellule de commutation 420 et la deuxième cellule de commutation 820 de la figure 9, puis une connexion parallèle dans une deuxième phase pour générer des ratios de tension variés entre l'entrée et la sortie. Dans un autre cas, il est possible de combiner la loi de variation f3(dIs/dt) de la figure 13 avec la loi f(Is) de la figure 4. Dans ce cas, la boucle dynamique prendrait le relais temporairement lors d'une variation des conditions pour se placer favorablement dans la zone d'intérêt de la capacité.

Dans les exemples présentés et de façon générale, le seuil de passage d'un mode à l'autre peut être déterminé dynamiquement par un algorithme de convergence (par exemple par « perturbation et observation ») . Par exemple, dans l'exemple de la figure 6A, un calcul dynamique du rendement pourrait être mis en oeuvre (en mesurant également la puissance d'entrée) puis le seuil de basculement serait modulé pour maximiser le rendement.

Dans les exemples présentés, chaque capacité peut être constituée de plusieurs capacités agencées en série et/ou parallèle.

Une mesure de la température peut être effectuée en plus des informations représentatives de la puissance d'entrée ou sortie du convertisseur. Les différentes lois de commande peuvent ainsi intégrer cette information de température pour définir le mode utilisé. Par exemple dans l'exemple de la figure 4, le seuil de courant Isc pourrait être modulé par la température. Si la température augmente, ce seuil augmente. En effet, la fréquence de transition entre les modes dépend fortement de la température.

Dans les cas où plusieurs cellules de commutation sont envisagées, on peut aussi envisager une loi de commande supplémentaire sélectionnant une partie des capacités en mode ionique et l'autre partie en mode électrostatique. Cela permet de trouver un compromis entre ondulation de la tension de sortie et rendement.

Dans une variante à la mesure de courant en sortie Is, il est possible de mesurer le courant en entrée du convertisseur qui, au rendement du convertisseur près, reflète le courant de sortie. Dans une autre variante, au lieu d'utiliser le courant de sortie, on peut mesurer l'ondulation en tension aux bornes de la capacité. Cette ondulation est un bon indicateur de la contribution des pertes par partage de charges (charge sharing en anglais).

Enfin, la mise en oeuvre pratique des modes de réalisation et variantes décrits est à la portée de la personne du métier à partir des indications fonctionnelles données ci-dessus. En particulier, les fonctions de commande présentées dans les modes de réalisation décrits pourraient être appliquées à d'autres types de convertisseur à capacités commutées, comme des élévateurs ou abaisseurs, de type série-parallèle, dickson ou fibonacci par exemple, ou également à des convertisseurs dits « hybrides » utilisant la concomitance de capacités et d'inductances pour réaliser une fonction de conversion continu-continu (DC-DC).

## Revendications

1. Convertisseur continu-continu (100) comprenant :
- un premier noeud (N1) et un deuxième noeud (N2) destinés à recevoir une tension continue à convertir ;
- un troisième noeud (N3) destiné à fournir une tension continue référencée au deuxième noeud ;
- au moins une première capacité (C1) à électrolyte solide présentant un fonctionnement de type ionique en dessous d'une fréquence de coupure (fc3) et un fonctionnement de type électrostatique pour des fréquences supérieures ;
- au moins une première cellule de commutation (420) constituée de quatre commutateurs (421, 422, 431, 432) couplant respectivement une première électrode de la capacité au premier noeud et au troisième noeud et une deuxième électrode de la capacité au deuxième noeud et au troisième noeud ;
- un circuit (414, 814, 816) configuré pour appliquer, à une information représentative de la puissance requise en sortie, une loi de variation de la fréquence de commutation à appliquer aux commutateurs ;
la loi de variation de la fréquence de commutation des commutateurs étant adaptée à la puissance requise en sortie et à sélectionner un mode de fonctionnement de la première capacité parmi le mode de fonctionnement électrostatique et le mode de fonctionnement ionique.

2. Procédé de commande d'un convertisseur continu-continu comprenant :
- un premier noeud (N1) et un deuxième noeud (N2) destinés à recevoir une tension continue à convertir ;
- un troisième noeud (N3) destiné à fournir une tension continue référencée au deuxième noeud ;
- au moins une première capacité à électrolyte solide présentant un fonctionnement de type ionique en dessous d'une fréquence de coupure (fc3) et un fonctionnement de type électrostatique pour des fréquences supérieures ;
- au moins une première cellule de commutation (420) constituée de quatre commutateurs couplant respectivement une première électrode de la première capacité au premier noeud et au troisième noeud et une deuxième électrode de la première capacité au deuxième noeud et au troisième noeud ;
- appliquer, avec un circuit (414, 814, 816), à une information représentative de la puissance de sortie, une loi de variation de la fréquence de commutation à appliquer aux commutateurs ; et
- adapter la fréquence de commutation des commutateurs à la puissance requise en sortie et à la sélection d'un mode de fonctionnement de la première capacité parmi le mode de fonctionnement électrostatique et le mode de fonctionnement ionique.

3. Convertisseur selon la revendication 1, ou procédé selon la revendication 2, dans lequel la sélection du mode de fonctionnement est fonction d'une loi de variation de ladite fréquence de commutation en fonction d'au moins une information relative à une puissance d'entrée ou de sortie du convertisseur.

4. Convertisseur ou procédé selon la revendication 3, dans lequel ladite au moins une information est comprise dans un groupe comprenant une tension, un courant, une puissance, une température et leurs variations respectives.

5. Convertisseur ou procédé selon la revendication 3 ou 4, dans lequel ladite loi de variation présente une fonction de transfert de type proportionnelle et/ou intégrale et/ou dérivée.

6. Convertisseur ou procédé selon l'une quelconque des revendications 3 à 5, dans lequel la loi de variation provoque un changement de fréquence brusque au passage d'un mode de fonctionnement à l'autre.

7. Convertisseur ou procédé selon la revendication 6, dans lequel la variation de la fréquence est continue.

8. Convertisseur ou procédé selon la revendication 6, dans lequel ledit changement provoque une discontinuité dans la variation de la fréquence.

9. Convertisseur selon l'une quelconque des revendications 1 et 3 à 8, ou procédé selon l'une quelconque des revendications 2 à 8, comprenant :
- au moins une deuxième capacité (C2) à électrolyte solide ;
- au moins une deuxième cellule de commutation (820) constituée de quatre commutateurs couplant respectivement une première électrode de la deuxième capacité (C2) au premier noeud (N1) et au troisième noeud (N3) et une deuxième électrode de la deuxième capacité au deuxième noeud et au troisième noeud ;
la fréquence de commutation des commutateurs de la deuxième cellule de commutation étant adaptée à la puissance requise en sortie et à sélectionner un mode de fonctionnement de la deuxième capacité (C2) parmi un mode de fonctionnement électrostatique et un mode de fonctionnement ionique.

10. Convertisseur ou procédé selon la revendication 9, dans lequel une loi de sélection (f2) est mise en oeuvre pour activer ou désactiver la deuxième cellule de commutation en fonction de la puissance d'entrée et/ou de sortie du convertisseur.

11. Convertisseur ou procédé selon la revendication 9 ou 10, dans lequel la fréquence de commande des commutateurs de la deuxième cellule est déphasée par rapport à la fréquence de commande des commutateurs de la deuxième cellule.

12. Convertisseur selon l'une quelconque des revendications 1 et 3 à 11, ou procédé selon l'une quelconque des revendications 2 à 11, dans lequel au moins un oscillateur (416, 1510, 1530) couplé au troisième noeud du convertisseur est configuré pour fournir la fréquence de commutation des commutateurs.

13. Convertisseur ou procédé selon la revendication 12, dans lequel un oscillateur distinct est associé à chaque mode de fonctionnement.

14. Convertisseur ou procédé selon les revendications 3 et 13, dans lequel une loi de variation distincte est associée à chaque mode de fonctionnement.
